# EUROPEAN PATENT SPECIFICATION

(11) **EP 0 509 988 B1**
(45) Date of publication and mention of the grant of the patent: **29.11.1995**
(21) Application number: 90906571.6
(22) Date of filing: 31.01.1990
(51) Int. Cl.: B01D 24/46, B01D 24/22

(54) **PLASTIC-JACKETED FILTER UNDERDRAIN BLOCK**
ABZUGSBLOCK MIT KUNSTSTOFFMANTEL für Filter
BLOC DE DRAINAGE pour FILTRE A ENVELOPPE PLASTIQUE

(43) Date of publication of application: 28.10.1992
(73) Proprietor: TETRA TECHNOLOGIES, INC., The Woodlands, Texas 77380 (US)
(72) Inventor: GRESH, Richard, D., Coraopolis, PA 15108 (US); NETHERLAND, Robert, B., Beaver, PA 15009 (US)
(74) Representative: VOSSIUS & PARTNER
(86) International application number: US9000566
(87) International publication number: WO9111244

(56) References cited:
- AU-A- 0 296 134
- DE-A- 2 632 040
- US-A- 2 499 325
- US-A- 2 818 977
- US-A- 3 440 788
- US-A- 4 132 043
- US-A- 4 133 766
- US-A- 4 340 478
- US-A- 4 707 257

## Description

### BACKGROUND OF THE INVENTION

### Field Of The Invention

This invention relates to apparatus for water and wastewater treatment. More specifically, the invention relates to filter underdrain blocks used to provide even distribution of liquid and gas during filter backwashing operations and also the uniform collection of filtered water during the normal operation of filtration units.

### Description Of The Related Art

It is desirable, to provide water and wastewater filtration units with a means for supporting the filter media such that the filter media is spaced apart from the bottom of the filter. This provides a space for the pipes which comprise that portion of the backwash air distribution system which is situated below the filter media. It also physically separates the filter media from the air distribution pipes. This helps prevent clogging of the orifices in the pipes by the finer particles of the filter media as well as removing the weight load of the overlying filter media from the pipes. Physical abrasion of the pipes is also avoided in this type of filter apparatus inasmuch as the gravel of the filter media is not in contact with the walls of the pipes. During backwashing operations the particles comprising the filter media tend to move about to some extent in response to the force of backwash air and water flows. If the filter media is in direct physical contact with the backwash air distribution pipes the pipes will be subjected to the abrasive action of the moving filter media (typically gravel and sand). Such abrasion shortens the useful life of the air distribution system.

Prior to the present invention, one of the most effective means for supporting filter media in the manner described above was to quip the filter with precast concrete underdrain blocks. These are specially designed blocks cast using high-strength concrete which are placed side by side and end to end in the bottom of a filter so as to form a "false bottom" which provides a support for the filter media. The blocks have legs such that when the blocks are placed on the bottom surface of the filter, passages are provided for the air distribution pipes between the legs of the blocks. Such blocks are shown in a brochure entitled "Deep-Bed Filter Systems" (4M-6/86) by Tetra Engineering Systems, Pittsburgh, Pennsylvania, USA. US-A-3 440 788 shows building blocks with a core of rigid material (e.g. concrete) and a plastic shell (e.g. molded in one part form).

In the past, such filter underdrain blocks had to be cast in metal molds which must be partially disassembled to remove the block after the concrete was sufficiently cured and then reassembled to cast the next block. The molds themselves were expensive and the production of such filter underdrain blocks in commercial quantities required the use of multiple molds inasmuch as one had to wait for the concrete to set on one block before that mold became available to cast another block. A typical cycle time for such a mold is 24 hours. Moreover, once the blocks were cast at the casting facility they had to be shipped to the filter construction site for use. This was expensive since the blocks are heavy and it subjects the blocks to potential damage during shipment and associated handling.

Furthermore, the known underdrain blocks show great head losses across the blocks during filtration and backwashing.

### SUMMARY OF THE INVENTION

The present invention comprises a precast, plastic-jacketed filter underdrain block. The plastic jacket additionally functions as a mold for the concrete. Thus, relatively lightweight, inexpensive plastic molds can be fabricated and shipped to the filter construction site where they are filled with concrete and then placed in the filter unit. The plastic molds become an integral part of the finished filter underdrain block.

In one preferred embodiment, the underdrain blocks are equipped with handholds which facilitate the handling and placement of the blocks in the filter vessel. The blocks may also be provided with alternating vertical ribs on the outside vertical surfaces of the plastic jacket which create an interlocking system whereby each block is interconnected to its adjacent side blocks thereby creating a uniform interconnected filter underdrain system which resists the uplifting of individual blocks during backwashing operations.

### BRIEF DESCRIPTION OF THE DRAWINGS

Figure 1 is a partially sectioned cross-sectional view of the lower portion of a typical gravity filter unit which employs the present invention to provide a filter underdrain system.

Figure 2 is a cross-sectional view of the plastic-jacketed filter underdrain blocks of the present invention taken along line "2 - 2" in Fig. 1.

Figure 3 is a cross-sectional view of the plastic-jacketed filter underdrain blocks of the present invention taken along line "3 - 3" in Fig. 1.

Figure 4 is a perspective view of the filter underdrain blocks. Also shown in Fig. 4 is a backwash air distribution pipe, space for which is provided by the configuration of the lower portion of the filter underdrain blocks.

Figure 5 is an end view of a filter underdrain block of the present invention.

Figure 6 is a cross-sectional view of a plastic-jacketed filter underdrain block of the present invention taken along line "6 - 6" in Fig. 4.

Figure 7 is an elevational view showing the dimensions (in centimeters) of one preferred embodiment of the filter underdrain blocks of the present invention viewed from the side.

Figure 8 is an elevational view in partial cross-section taken along line "8 - 8" in Fig. 10.

Figure 9 is a plan view in partial cross-section taken along line "9 - 9" in Fig. 7.

Figure 10 is an elevational view of the embodiment of the invention shown in Fig. 7, viewed from the end.

### DETAILED DESCRIPTION

The present invention comprises a combination plastic jacket and concrete mold for filter underdrain blocks. The invention encompasses precast filter underdrain blocks which incorporate the mold as a plastic jacket, and a method for supporting filter media.

The plastic-jacketed precast blocks of the present invention can be used to provide a filter underdrain system for upflow and downflow filtration units which provides even distribution of liquid (usually water) and gas (usually compressed air) during backwashing operations and also provides for the uniform collection of filtered water during normal operation of the filtration unit.

The precast filter blocks are designed to:
(1) support the filter media while creating a chamber between the media and the effluent collection system for housing the backwash air distribution system, as well as provide for the even distribution of the backwash water and backwash air, and the uniform collection of filtered water;
(2) be relatively lightweight and compact thereby permitting simple and rapid installation;
(3) have sufficient strength to withstand the pressures created during filter operation and to avoid problems with breakage during installation and handling;
(4) reduce head losses during operation of the filter unit by providing a smooth exterior surface;
(5) be easily produced in bulk thereby reducing manufacturing costs while maintaining accurate and consistent overall dimensions; and,
(6) in one preferred embodiment, interlock to prevent lifting of individual blocks during the backwash cycle.

The size and shape of the precast block makes it easy to handle and install by one person. The plastic mold is filled with high strength (5000 psi = 350 kg/cm²) concrete. The smooth exterior surfaces of the plastic mold which becomes an integral part of the finished block greatly reduces the coefficient of friction on the block surface thereby minimizing head losses across the blocks during both filtration and backwashing operations. The plastic jacket remains on the filter underdrain block after the concrete has cured and it becomes an integral part of the block. The plastic jacket/mold can be manufactured to exact overall dimensions and uniformity can readily be maintained from jacket to jacket thereby maintaining dimensional stability and block uniformity.

In one preferred embodiment, the plastic jacket/molds are provided with alternating vertical ribs on the outside vertical surfaces. This creates an interlocking system whereby each block may be interconnected to adjacent side blocks thereby creating a uniform interconnected filter underdrain system which resists uplifting and displacement of individual blocks under the influence of backwash air and water flows.

In the illustrated embodiment, hand grips are incorporated into each end of the jacket/mold. This enables the finished blocks to be handled easily and reduces the chances of dropping and breaking the blocks during installation.

A method for supporting filter media is described in claim 14.

It has been found that blocks cast with 5000 psi (350 kg/cm²) concrete in the jacket/molds of the present invention easily withstand the operating pressures and filter media load of typical wastewater treatment filters. The blocks require no reinforcing material inasmuch as the loads experienced by the blocks during operation are compressive. Reinforcing members such as steel rods or wire could, of course, be easily incorporated by installing them in the mold through the top opening prior to filling the jacket/mold with concrete.

The preferred aggregate for the concrete used to cast the filter underdrain blocks is a gravel in the 1/4 by 3/8-inch (6.35 by 9.52 mm) sieve size. Such an aggregate is sometimes referred to as Ohio State Highway Department #8 aggregate.

The concrete mix is preferably 1.5 parts by volume portland cement, 2 parts by volume sand, and 3 parts by volume gravel of the above-mentioned type. A plasticizer may be incorporated to fluidize the concrete for pouring. An appropriate plasticizer has been found to be DAREX brand plasticizer WRDA-19 manufactured by E. R. Grace & Company. The manufacturer's instructions should be followed concerning dosage and mixing. It has been found to be advantageous to vibrate the plastic mold/jackets as they are filled to ensure that no voids remain within the mold.

### EXAMPLE 1

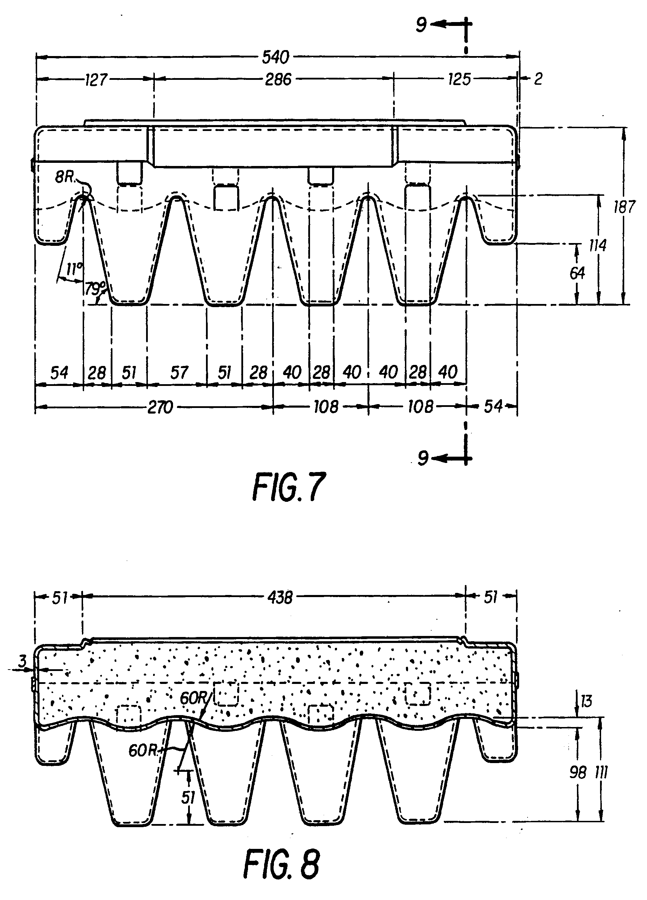

A strength test was performed using plastic-jacketed blocks of the present invention having the dimensions shown in Figure 7. The blocks were cast with 5000 psi (350 kg/cm²) concrete mix. The concrete was allowed to cure for not less than seven days. The blocks weighed approximately 50 pounds (23 kg) each. Initial failure was indicated to occur at an average load of 76,000 pounds (34,500 kg)(average of three tests). Total failure required an average load of 83,500 pounds (37,900 kg)(three tests).

### EXAMPLE 2

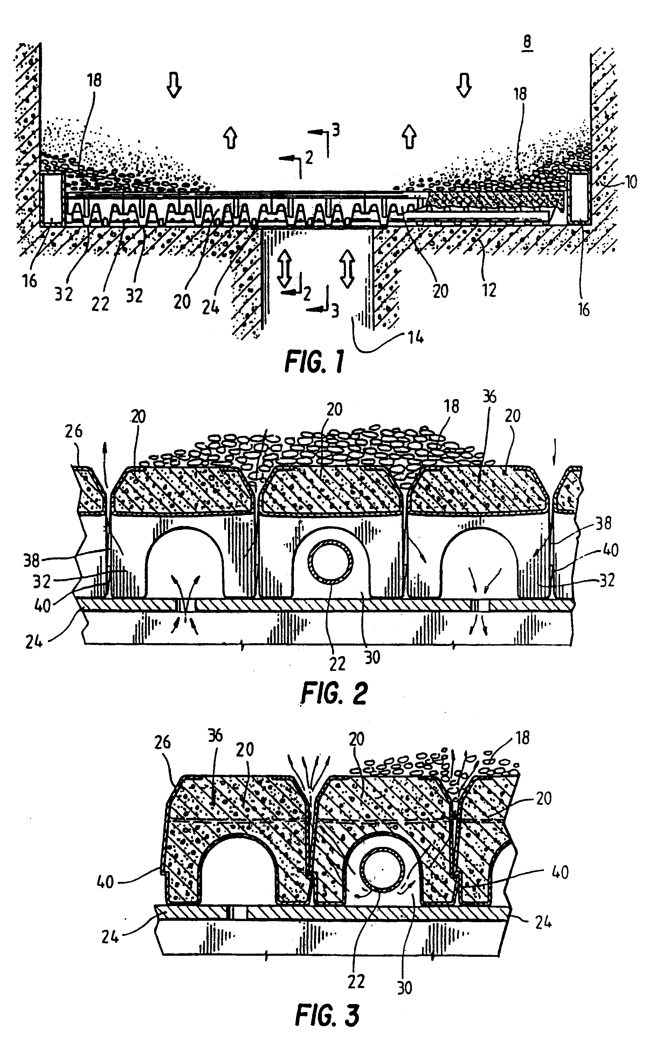

The test described in Example 1 was repeated using the non-jacketed blocks of the prior art i.e., precast concrete air/water distribution blocks produced using steel molds. The design of these blocks is illustrated in figure 2 on page 3 of the above mentioned brochure. The overall dimensions of the blocks tested were 8 inches (203 mm)(width) by 12 inches (305 mm)(length). The same concrete mix and curing time was used as in Example 1. Initial failure was indicated to occur at an average load of 20,600 pounds (9,340 kg)(three tests) and total failure occurred at an average load of 47,600 pounds (21,600 kg)(three tests).

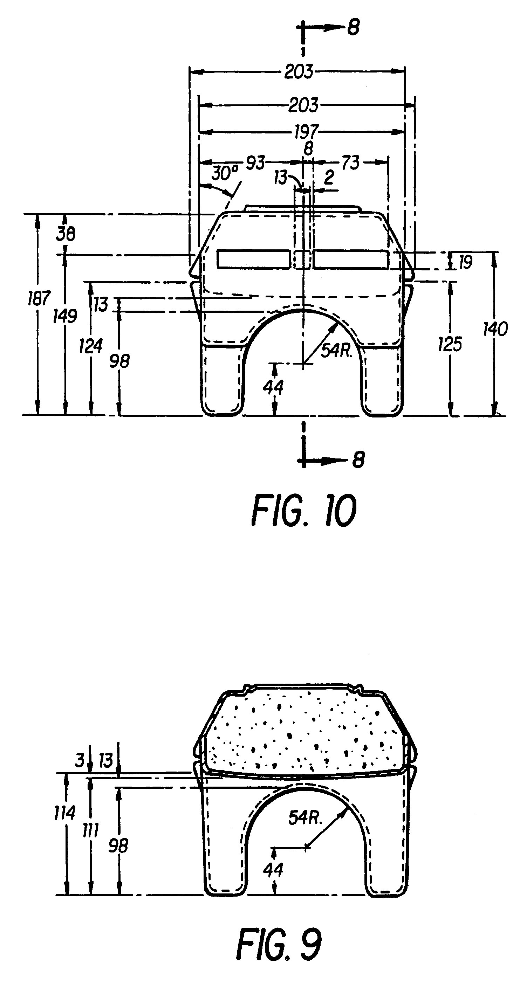

The preferred plastic for the jacket/molds is high density polyethylene. It requires approximately 2.35 pounds (1.1 kg) of plastic to produce a jacket/mold of the present invention having the dimensions shown in Figs. 7 - 10. The illustrated embodiment may be produced in a single-cavity injection mold. At present, rotational molded jacket/molds are preferred. It is contemplated that blow molding could be used to produce the plastic jacket/molds of the present invention.

The use of the filter underdrain blocks of the present invention to provide an underdrain system at the bottom of a filtration unit 8 is shown in Figure 1. Filtration unit 8 comprises a vessel comprising side walls 10 and bottom 12. A sump 14 is provided for the collection of filtrate during normal filter operation (flow direction indicated by the downward-pointing arrows) and for the supply of backwash water during backwashing operations (flow indicated by the upward-pointing arrows). Sump 14 is provided at its upper extreme with perforate plate 24 which supports the blocks situated over the sump. Backwash air is supplied via headers 16 to perforate conduit 22. Filter media 18 is supported by filter underdrain blocks 20 which additionally provide a passage, chamber, or space 30 between block legs 32.

A portion of the array of blocks comprising the filter underdrain system is shown in cross section in Figure 2. The section is taken through line "2 - 2" in Figure 1. This is a section through a portion of the block between an opposing pair of legs 32. Plastic jacket/mold 26 as well as concrete fill 36 can be seen in this cross-sectional view. It should be noted that the blocks are spaced apart to create gap 38 which provides for air and water flow past the blocks. Gap 38 is preferably about 1/4 inch (6.35 mm). In-one preferred embodiment, interlocking lugs 40 are sized to provide the desired size of gap 38 when the blocks are positioned such that lugs 40 are in contact with the sides of the adjacent blocks.

Figure 3 is a cross-sectional view similar to Figure 2 but taken along line "3 - 3" in Figure 1. Thus, this view is taken through an opposing pair of legs 32 having interlocking lugs 40.

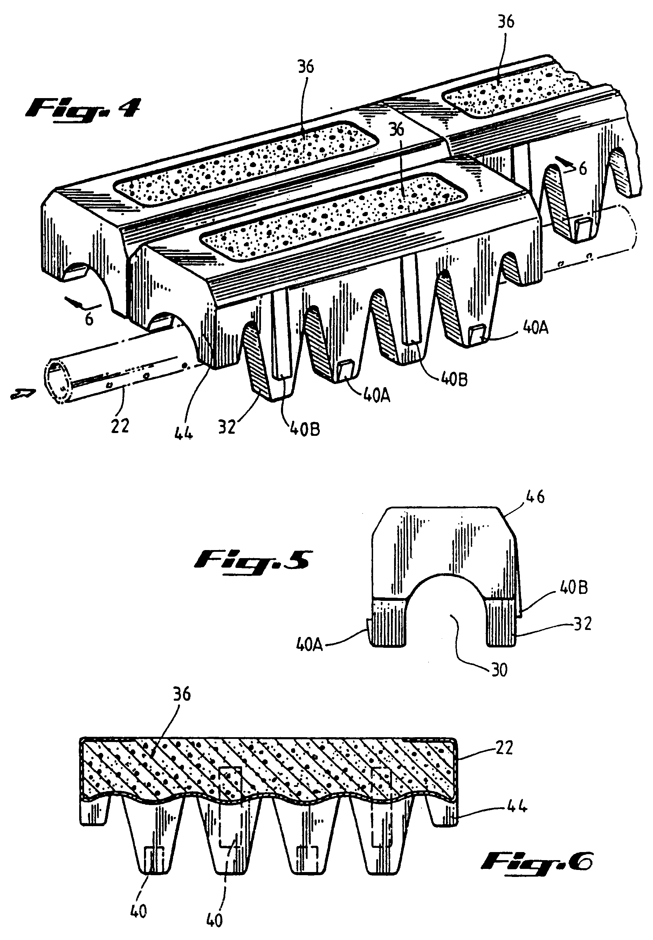

Figure 4 is a perspective view showing how the blocks are arranged in an interlocking array to provide a filter underdrain system. The interlocking system is provided by the engagement of lower lugs 40A with upper lugs 40B. The legs 32 are provided with alternating lug types such that any block will interlock with its neighboring side blocks. Handhold 44 is also shown in Figure 4.

Figure 5 is an end view of an embodiment of the present invention which incorporates interlocking lugs 40. Also shown in this figure is bevel 46 which provides a channel for water into the gap 38 between adjacent blocks during normal downflow operation of the type of filter illustrated.

Figure 6 is a longitudinal cross-sectional view taken along line "6 - 6" in Figure 4. This section is taken along the center line of the block between the opposing rows of legs. The handhold 44 provided at each end of the block may be seen in this figure.

## Claims

1. A combination mold and jacket (26) for a filter underdrain block (20), comprising a hollow plastic member preformed to form the jacket (26) of a filter underdrain block (20) shaped to provide for the passage of air, and defining an opening for receiving a castable fill material, wherein said hollow plastic member includes a plurality of hollow, laterally spaced legs (32) arranged to define a passage (30) between said legs (32) and extending from one end of the plastic member to the other end.

2. The mold and jacket of claim 1, said hollow plastic member having at least two ends, wherein at least one of said ends comprises a handhold (44).

3. The mold and jacket of claim 1, said hollow plastic member having at least two sides, wherein at least one of said sides comprises a spacer lug (40).

4. The mold and jacket of claim 3 in which each side of the hollow plastic member has at least one said lug (40A) having an upward facing surface and at least one said lug (40B) having a downward facing surface, said lugs (40) being arranged such that each downward facing lug (40B) of a first hollow plastic member abuts an upward facing lug (40A) of a second hollow plastic member placed alongside the first hollow plastic member to resist relative lifting movement between the two hollow plastic members.

5. The mold and jacket of claim 1 further comprising a castable filling material (36) cast within and filling said hollow plastic member.

6. The combination mold and jacket of claim 1 in which its top surface is beveled downward along each side of the plastic member.

7. A filter underdrain block comprising:
a single-piece, hollow plastic jacket (26) and a filler material (36) cast within said jacket (26), wherein said plastic jacket (26) has a top surface, a bottom surface, and end and side surfaces; and
said top surface defines an opening for receiving said filler material in castable form; and
said bottom surface is shaped to define a passage along said jacket.

8. A filter underdrain block as recited in claim 7, wherein the filler material (36) is high strength concrete.

9. A filter underdrain block as recited in claim 7, wherein the filler material (36) additionally comprises a plasticizer.

10. A filter underdrain block as recited in claim 7, wherein the plastic mold has ribs for interconnecting the block (20) with another adjacent block (20).

11. A filter underdrain block as recited in claim 7, wherein the mold comprises hand grips.

12. An underdrain system for filtering waste water, comprising filter media (18) and an array of blocks (20) according to claim 1

13. An underdrain system as recited in claim 12, wherein the blocks (20) comprise means (40) for their interconnection.

14. A method for supporting filter media, comprising:
filling a preformed plastic mold with uncured concrete (36);
curing the uncured concrete (36) in the mold to render the cured concrete (36) integral with the mold:
placing the mold in a filter unit: and
covering the mold with the filter media (18).

## Patentansprüche

1. Kombination von Form und Mantel (26) für einen Filter-Abzugsblock (20), mit einem hohlen Kunststoffteil, das zur Ausbildung des Mantels (26) eines Filter-Abzugsblocks (20) vorgeformt ist, der so geformt ist, daß er den Durchgang von Luft vorsieht, und das eine Öffnung zum Aufnehmen eines gießfähigen Füllmaterials bildet, wobei das hohle Kunststoffteil mehrere hohle, seitlich beabstandete Füße (32) aufweist, die so angeordnet sind, daß sie einen Durchgang (30) zwischen den Füßen (32) bilden und von einem Ende des Kunststoffteils zu dem anderen Ende verlaufen.

2. Form und Mantel nach Anspruch 1, wobei das hohle Kunststoffteil mindestens zwei Enden hat und mindestens eines dieser Enden einen Handgriff (44) aufweist.

3. Form und Mantel nach Anspruch 1, wobei das hohle Kunststoffteil mindestens zwei Seiten hat und mindestens eine der Seiten einen Abstandhalteransatz (40) hat.

4. Form und Mantel nach Anspruch 3, wobei jede Seite des hohlen Kunststoffteils mindestens einen solchen Ansatz (40A) mit einer aufwärts zeigenden Fläche und mindestens einen solchen Ansatz (40B) mit einer abwärts zeigenden Fläche hat und die Ansätze (40) so angeordnet sind, daß jeder abwärts zeigende Ansatz (40B) eines ersten hohlen Kunststoffteils an einem aufwärts zeigenden Ansatz (40A) eines längsseits des ersten hohlen Kunststoffteils plazierten zweiten hohlen Kunststoffteils anstößt, um einer relativen Hebebewegung zwischen den beiden hohlen Kunststoffteilen zu widerstehen.

5. Form und Mantel nach Anspruch 1, ferner mit einem gießfähigen Füllmaterial (36), das in dem hohlen Kunststoffteil vergossen ist und es ausfüllt.

6. Kombination von Form und Mantel nach Anspruch 1, wobei ihre Oberseite entlang jeder Seite des Kunststoffteils abwärts abgeschrägt ist.

7. Filter-Abzugsblock mit:
einem aus einem Stück bestehenden, hohlen Kunststoffmantel (26) und einem in dem Mantel (26) vergossenen Füllmaterial (36), wobei der Kunststoffmantel (26) eine Oberseite, eine Unterseite sowie End- und Seitenflächen hat; und
die Oberseite eine Öffnung zum Aufnehmen des Füllmaterials in gießfähiger Form bildet; und
die Unterseite so geformt ist, daß sie einen Durchgang entlang des Mantels bildet.

8. Filter-Abzugsblock nach Anspruch 7, wobei das Füllmaterial (36) hochfester Beton ist.

9. Filter-Abzugsblock nach Anspruch 7, wobei das Füllmaterial (36) zusätzlich einen Plastifikator aufweist.

10. Filter-Abzugsblock nach Anspruch 7, wobei die Kunststofform Rippen zum Ineinandergreifen des Blocks (20) mit einem weiteren benachbarten Block (20) hat.

11. Filter-Abzugsblock nach Anspruch 7, wobei die Form Handgriffe aufweist.

12. Wasserabzugssystem zum Filtern von Abwasser, mit einem Filtermedium (18) und einer Anordnung von Blöcken (20) nach Anspruch 1.

13. Wasserabzugssystem nach Anspruch 12, wobei die Blöcke (20) eine Einrichtung (40) zu ihrem gegenseitigen Verbinden aufweisen.

14. Verfahren zum Abstützen eines Filtermediums mit den Schritten:
Füllen einer vorgeformten Kunststofform mit ungehärtetem Beton (36);
Härten des ungehärteten Betons (36) in der Form, um den gehärteten Beton (36) mit der Form zu integrieren;
Plazieren der Form in einer Filtereinheit; und
Abdecken der Form mit dem Filtermedium (18).

## Revendications

1. Combiné de moule et de gaine (26) pour un bloc drainant par le fond de filtrage (20), comprenant un membre plastique creux préformé pour former la gaine (26) d'un bloc drainant par le fond de filtrage (20), profilé pour assurer le passage de l'air, et définissant une ouverture pour recevoir une matière de remplissage coulable, dans lequel ledit membre plastique creux comprend une pluralité de jambes (32) creuses espacées latéralement disposées de façon à définir un passage (30) entre lesdites jambes (32) et s'étendant d'une extrémité du membre plastique à l'autre extrémité.

2. Combiné de moule et de gaine selon la revendication 1, ledit membre plastique creux ayant au moins deux extrémités, dans lequel au moins l'une desdites extrémités comprend une poignée (44).

3. Combiné de moule et de gaine selon la revendication 1, ledit membre plastique creux ayant au moins deux côtés, dans lequel au moins l'un desdits côtés comprend un ergot d'écartement (40).

4. Combiné de moule et de gaine selon la revendication 3, dans lequel chaque côté du membre plastique creux compte au moins un ergot (40A) ayant une surface tournée vers le haut et au moins un ergot (40B) ayant une surface tournée vers le bas, lesdits ergots (40) étant disposés de telle façon que chaque ergot tourné vers le bas (40B) d'un premier membre plastique creux se positionne en butée contre un ergot tourné vers le haut (40A) d'un second membre plastique creux placé le long du premier membre plastique creux pour résister au mouvement de soulèvement relatif entre les deux membres plastiques creux.

5. Combiné de moule et de gaine selon la revendication 1, comprenant en outre une matière de remplissage coulable (36) coulée à l'intérieur dudit membre plastique creux et remplissant celui-ci.

6. Combiné de moule et de gaine selon la revendication 1, dans lequel sa surface supérieure est biseautée vers le bas sur chaque côté du membre plastique.

7. Bloc drainant par le fond de filtrage comprenant:
une gaine (26) plastique creuse d'une seule pièce et une matière de remplissage (36) coulée à l'intérieur de ladite gaine (26), dans lequel ladite gaine plastique (26) a une surface supérieure, une surface inférieure et des surfaces extrêmes et latérales; et
ladite surface supérieure définit une ouverture pour recevoir ladite matière de remplissage sous forme coulable; et
ladite surface inférieure est profilée de façon à définir un passage le long de la gaine.

8. Bloc drainant par le fond de filtrage selon la revendication 7, dans lequel la matière de remplissage (36) est du béton à haute résistance.

9. Bloc drainant par le fond de filtrage selon la revendication 7, dans lequel la matière de remplissage (36) comprend en outre un plastifiant.

10. Bloc drainant par le fond de filtrage selon la revendication 7, dans lequel le moule plastique comporte des nervures pour interconnecter le bloc (20) avec un autre bloc (20) adjacent.

11. Bloc drainant par le fond de filtrage selon la revendication 7, dans lequel le moule comprend des poignées.

12. Système drainant par le fond pour filtrer les eaux usées, comprenant un milieu de filtrage (18) et un ensemble de blocs (20) selon la revendication 1.

13. Système drainant par le fond selon la revendication 12, dans lequel les blocs comprennent des moyens (40) permettant leur interconnexion.

14. Procédé pour supporter le milieu de filtrage, comprenant les étapes de:
remplissage d'un moule plastique préformé avec du béton (36) non durci;
durcissement du béton (36) non durci dans le moule pour solidariser le béton (36) durci avec le moule;
placement du moule dans une unité de filtrage; et
recouvrement du moule avec le milieu de filtrage (18).
